# EUROPEAN PATENT SPECIFICATION

(11) **EP 3 025 083 B1**
(45) Date of publication and mention of the grant of the patent: **05.09.2018**
(21) Application number: 14742340.4
(22) Date of filing: 18.07.2014
(51) Int. Cl.: F16L 17/04, F16L 21/08, F16L 37/092, F16L 37/10, F16L 55/16

(54) **IMPROVEMENTS IN AND RELATING TO PIPE COUPLING**
VERBESSERUNGEN AN UND IN ZUSAMMENHANG MIT ROHRVERBINDUNGEN
AMÉLIORATIONS DANS ET CONCERNANT UN RACCORD DE TUYAUX

(30) Priority: 22.07.2013 GB 201313050
(43) Date of publication of application: 01.06.2016
(73) Proprietor: JCCO 331 Limited, Manchester, Greater Manchester M2 4LQ (GB)
(72) Inventor: DAVIDSON, Paul, Macclesfield Cheshire (GB)
(74) Representative: Appleyard Lees IP LLP
(86) International application number: PCT/GB2014/052212
(87) International publication number: WO 2015/011454

(56) References cited:
- EP-A2- 1 460 325
- DE-A1-102006 031 582
- DE-B3- 10 340 946
- GB-A- 2 485 350
- US-A- 3 480 302
- US-A1- 2013 125 373

## Description

The present invention relates to a coupling for connecting tubular conduits, in particular for connecting lengths of pipe as part of a fluid transport system.

Fluid transport systems are known for conveying materials, such as liquids and gasses. The systems may include domestic plumbing systems installed in a building for conveying, for example, water or oil. These plumbing systems may include pipes for building heating systems, fire protection sprinkler systems and rising mains pipes and waste water pipes. The systems may also include oil and gas pipelines for conveying fuel over thousands of miles and pipe systems used in mining applications. The tubular conduits used in fluid transport of fuel may be made of different metals, including steel, iron, copper, aluminium and plastic.

For smaller diameter pipes, push fit pipe couplings can be used. However, for pipe diameters above around 5cms, the force required to push the end of a pipe into such a push fit coupling becomes too high for manual connection. In addition, pipes connected by push fit couplings are able to rotate relative to each other, which can cause valve taps to move out of an optimum position.

For larger diameter pipes, welded joints can be used. However, welded joints have the disadvantage of requiring skilled workers as well as having negative health and safety and environmental implications. For example, the construction of a gas conveying pipeline made from 12 metre long lengths of steel pipe, and with a 1 metre diameter, conventionally use welded joints. Each joint can take a skilled team 7 hours to make, when taking into consideration the deployment of equipment at the joint location and inspection of the joint by X-ray equipment. Also, around 1 in 10 of such welded joints will have to be repaired after such an inspection. This makes pipelines expensive and time consuming to construct.

Where plastic pipes are used, heat fused joints may be used, in which the ends of the pipes to be connected are heated up and then fused together.

Push fit couplings, welded joints and fused joints are difficult to disconnect, for example for repair or maintenance, with such disconnection often causing damage to the pipes.

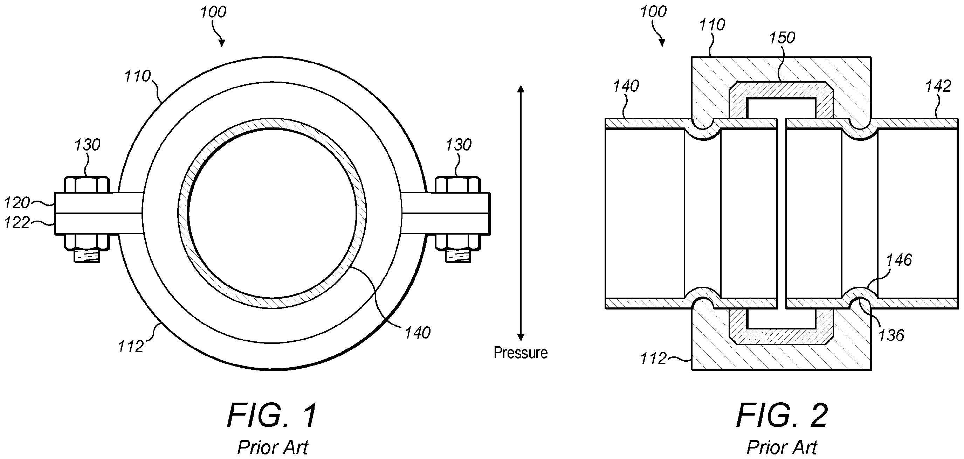

Victaulic (also known as victolic) pipe joints are known in the art, in which the pipe ends to be connected are formed with an annular groove in their external surface. An example of a Victaulic type pipe joint is shown in Figures 1 and 2. Figure 1 shows a longitudinal view along the pipe of such a pipe joint 100. Figure 2 shows a cross-sectional view of the joint 100.

An annular resilient gasket 150, with a C-shaped longitudinal cross-section is placed over the ends of the pipes 140, 142 to be joined, so that the gasket straddles the two pipes. Typically, the gasket is stretched slightly to fit over the pipe ends so as to form a seal between the gasket and the pipes. The gasket is then encased by a rigid Victaulic type casing 110, 112, which engages the grooves 146 formed in the pipe ends. Engagement is via projections 136 formed in the respective rims of the two halves 110, 112 of the casing. Generally the casing is formed in two halves 110, 112, formed with flanges 120, 122 and the two halves are connected together by bolts 130 passing through the flanges. The casing compresses the sealing gasket 150 to further improve the seal between the gasket and the pipe ends.

There are known problems with such Victaulic pipe joints. The first is that they are not well suited to high pressure pipe systems. In particular where one of the pipe elements coupled together by the joint comprises a pipe end cap, the joint has to withstand significant forces acting to pull the pipe ends connected by the joint apart. When fluid pressure builds up within the pipe joint of Figures 1 and 2, the pressure acts radially outwardly on the gasket, causing the gasket to inflate and apply a radially outwardly directed force to the casing halves 110, 112. That is, the pressure acts in the direction of the double headed arrow, labelled 'pressure' in Figures 1 and 2. This force acts to pull the casing halves apart, and so high fluid pressure within the pipe joint 100 is transferred to the bolts 130 holding the casing halves 110, 112 together. Victaulic type pipe joints are typically rated to work at fluid pressures of 150psi, 300psi or 500psi and are rated to fail at about 5 times the specified working pressure.

In addition, pipes connected by a Victaulic type pipe joint, of the type shown in Figures 1 and 2, may be able to rotate with respect to each other and with respect to the casing 110, 112, which may cause problems of movement of pipe valves, etc. to inaccessible locations. Victaulic type pipe joints can also fail if the bolts come undone due to vibration of the pipe system.

A further problem with grooved pipes is that forming the grooves in the pipes is a time-consuming business in itself, and can be difficult to do, especially in the field, where there may be a single suitable machine and a great many pipes needing to be processed. This can cause a bottle neck in the pipe installation process.

Pipes which are used to transport bulk liquids, such as oil or other fuels, are often 48 inches (approximately 1.2 metres) in diameter, and the problems of handling such pipes are not insignificant. Also, so that pipe lengths can be easily transported by road to their installation sites, they can not typically be manufactured in lengths greater than about 12 metres. That means that for every kilometre of pipe length, it is necessary to make 83 joints between pipe sections. If such joints are welded, each one can take a skilled welder about 7 hours to complete. Even using Victaulic type joints can take several hours, by the time the grooves have been formed in the pipes.

A further problem with Victaulic type joints is that it is not possible to tell from a speedy visual inspection if they have been properly installed or not. It is a known problem that a joint which has been fitted but not sufficiently tightened can pass a visual inspection and even an initial operational test, only to fail some time later. Such joints are known in the industry as "brew time" or "coffee break" joints, as they can often arise when a fitter only partially tightens the bolts of the joint and then breaks for coffee, forgetting to finish the job on his return. Also, such joints may be deliberately poorly fitted by a disgruntled employee.

US 2013/125373A1 discloses a coupling having angularly oriented surface portions.

It is an aim of embodiments of the present invention to address these and other shortcomings in prior art pipe coupling systems.

According to a first aspect of the present invention, there is provided a pipe coupling for connecting the ends of two tubular conduits, comprising: a pair of casing elements, each comprising an outer part and a pair of inner parts, the inner and outer parts being rotatable relative to each other, wherein in a first configuration, the pair of casing elements are separate and positionable to surround the ends of the tubular conduits and, in a second configuration, they are locked together, wherein the locking together is achieved by relative rotation of the respective inner and outer parts such that the inner parts of one casing element at least partially engage with the outer part of the other casing element.

Preferably the outer elements are housing elements and the inner elements are pipe engaging elements.

Preferably at least one of the pipe engaging elements has a radially inwardly facing projection arranged to engage a groove in a pipe.

Preferably the radially inwardly facing projection has pips provided on a surface to, in use, contact a base of the groove. The pips may be provided at substantially equal spacing around the surface of the projection.

Preferably at least one of the pipe engaging elements has radially inwardly facing teeth to partially penetrate a surface of a pipe. The teeth may be formed from a relatively hard material, such as stainless steel or ceramic.

Preferably wherein end faces of the housing elements and/or the pipe engaging elements are provided with alignment features. Preferably the alignment features comprises complementary recesses and projections.

Preferably the pipe coupling comprises a locking mechanism which, when engaged, prevents relative rotation of the inner and outer parts.

Preferably the locking mechanism comprises a relatively elongate insert arranged to be accommodated in a complementary aperture in the outer part and to engage with a complementary ridge in the inner part.

Preferably the locking mechanism further comprises a release mechanism for disengaging the lock mechanism.

Preferably the release mechanism is a slot arranged to allow the locking mechanism to be levered out of the locked position.

According to a second aspect of the present invention, there is provided a pipe coupling for connecting the ends of two tubular conduits, comprising: an annular gasket arrangement; a casing arrangement, comprising first and second casing elements, wherein the first casing element comprises a first housing element and a first pair of pipe engaging elements, and the second casing element comprises a second housing element and a second pair of pipe engaging elements, wherein each pair of pipe engaging elements is retained in the respective housing element and rotatable relative to it, and each housing element is arranged to accommodate the annular gasket arrangement and to straddle the ends of the two tubular conduits such that if the first and second casing elements are brought into close proximity to substantially enclose the annular gasket arrangement, and the housing elements and pipe engaging elements are caused to rotate relative to each other, then the first pair of pipe engaging elements engage with the second housing element, and the second pair of pipe engaging elements engage with the first housing element to lock the casing arrangement.

According to a third aspect of the present invention, there is provided a method of repairing leaking pipes using an apparatus of the first or second aspect.

For a better understanding of the invention, and to show how embodiments of the same may be carried into effect, reference will now be made, by way of example, to the accompanying diagrammatic drawings in which:
Figures 1 and 2 show longitudinal and cross-sectional views of a prior art pipe coupling;
Figure 3 shows a perspective view of a partially constructed pipe coupling according to an embodiment of the invention;
Figure 4 shows a partial cross-section of a partially constructed pipe coupling according to an embodiment of the invention;
Figures 5a-e shows details of a locking mechanism, according to an embodiment of the invention;
Figure 6 shows a partial cross-sectional view through a pipe coupling according to an embodiment of the invention;
Figures 7a and 7b show cross-sectional views of further embodiments of the present invention;
Figures 7c and 7d show cross-sectional views of further embodiments of the present invention;
Figure 8 shows an embodiment of the present invention for connecting dissimilar pipes;
Figures 9a-d show a prior art technique used to temporarily repair burst pipes; and
Figures 10a-e show a technique according to an embodiment of the present invention to permanently repair burst pipes.

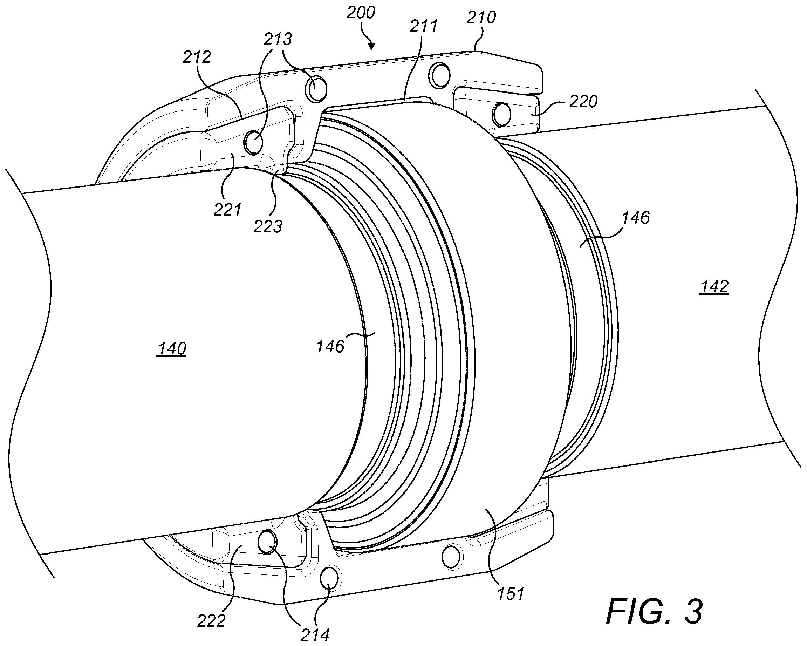

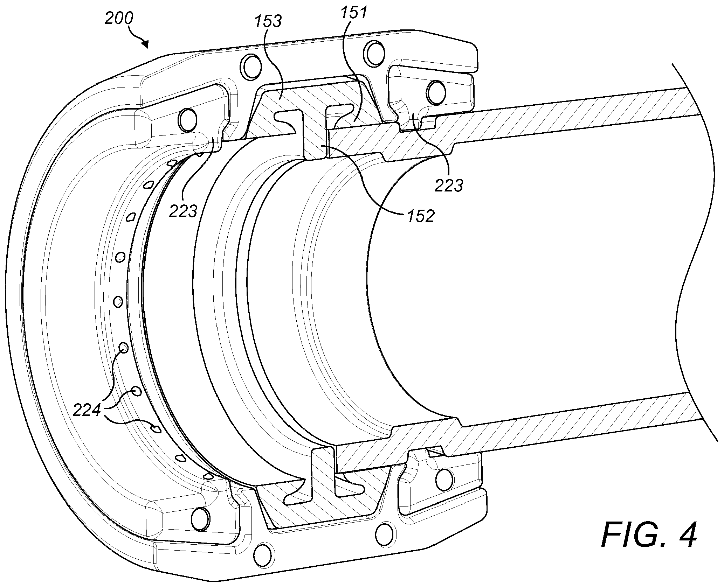

Figure 3 shows first and second pipes 140, 142, of the type having an annular groove 146 located in its outer surface, near to an end. An annular gasket 151 is provided which creates a fluid-proof seal between the respective ends of the pipes. The form of the gasket 151 is more clearly seen in Figure 4, which shows a cross-section through the gasket. The gasket has a roughly T-shaped cross-section, where the central 'upright' portion 152 is arranged to be positioned between the ends of each pipe 140, 142. The 'horizontal' portions 153 of the T-shape are terminated in portions arranged to contact the exterior of the pipe and to provide a snug fit around the outer circumference of the end portion of the pipe.

The gasket is made of resilient sealing material and may, for example, be moulded of natural or synthetic rubber. Other materials from which the gasket may be made include, ethylene propylene diene monomer (EPDM) (generally used where the transported fluid is water), a nitrile compound (generally used where the transported fluid is oil), fluoro-elastomer, neoprene, white nitrile and epichlorohydrin.

Figures 3 and 4 show one half of a casing arrangement which, together with the gasket, forms a pipe coupling according to an embodiment of the invention. The casing arrangement comprises a pair of casing elements 200. The two casing elements co-operate as will be described shortly to couple the ends of the pipes 140, 142.

The casing element 200 comprises a housing element 210 and two pipe-engaging elements 220. In the embodiment shown, the casing element is semi-circular in longitudinal cross-section, and two such casing elements (only one of which is shown in Figures 3 and 4, for clarity) are required to form a complete casing arrangement.

Before examining how two casing elements 200 co-operate, it is instructive to examine a single casing element, so that its various parts and their interaction can be understood.

The housing element 210 has a central channel 211 which is arranged to accommodate the gasket 151, and two outer channels 212 which are arranged to receive and retain the pipe-engaging elements. The housing element 210 may be formed from any suitable material, depending, in part on the size of the pipe joint and the pressure expected in the pipes. Suitably, the housing element may be formed from a moulded plastics material or from steel or another metal, milled or cast as needed. Compared to similarly configured prior art Victaulic style fittings, the weight of an embodiment is approximately 50% lower, resulting in significant materials savings.

The pipe-engaging element 220 is substantially C-shaped and is manufactured separately from the housing element. It is designed to be retained in the outer channel 212 of the housing element 210. It comprises a radially inwardly extending projection 223, which is arranged, in use, to extend into the groove 146 at the end of a pipe to be coupled. The projection 223 is further provided with a plurality of pips 224 which extend slightly from the surface of projection 223. These are provided to further improve the engagement of the pipe engaging element with the pipe 140, 142.

In order to assemble the casing element 200, the two pipe-engaging elements 220 are inserted into the outer channel 212, such that they follow the arc of the outer channel 212. Once fully inserted, the ends of the pipe-engaging portion 220 are flush with the exposed flat surface of the housing element 210, as can be seen in Figures 3 and 4. It is important to note that the pipe-engaging portion 220, although retained and unable to separate from the housing element in a longitudinal direction, it is able to rotate freely with respect to the housing element and, if rotated through 180° from the position shown in Figures 3 and 4, it will separate completely from the housing element 210.

The relative rotation of the housing element 210 and pipe-engaging portions 220 is critical in the operation of embodiments of the present invention, as will become clear in the following description.

To assemble the pipe joint, the ends of the two pipes 140, 142 are brought into close proximity and the ends are inserted into the gasket 151. Then, a first casing element is brought into contact with both pipes and the gasket 151, as shown in Figure 3. In this configuration, the gasket 151 is accommodated in the central channel 211, and the radially inwardly extending projection 223 is disposed within groove 146 at the end of the pipe.

Next, a second casing element 200 is introduced such that it abuts the first casing element 200, which is already in position. Now, both casing elements completely surround the gasket 151 and form a continuous annulus. However, in this configuration, there is nothing in place to form a permanent joint and if the two casing elements are released, they would simply fall away.

In order to assist the process of bringing the two casing elements into abutment, alignment aids may be provided on the respective facing surfaces of the housing elements 210 and/or the pipe-engaging elements 220. These can take the form of projections 213 and recesses 214, such that when the two casing elements are brought into close contact, the respective projections 213 and recesses 214 positively engage and a user can easily determine that correct alignment has been achieved.

In order to complete the joint, it is necessary to rotate the two, now abutting, housing elements. This is achieved by rotating the housing elements simultaneously, with respect to the pipes 140, 142. The pipe-engaging elements 220 remain stationary with respect to the pipes 140, 142, since they are in frictional engagement with the grooves, assisted by the pips 224.

However, by rotating the housing elements, a first end 221 of a pipe-engaging element is caused to enter the outer channel 212 of the other housing element. Of course, at the same time, a second end 222 of the same pipe-engaging element moves further into its associated housing element. This is accompanied by the pipe engaging element of the second casing element entering the outer channel 212 of the first housing element.

Once the housing elements have been rotated by 90°, then each pipe-engaging element 220 is equally engaged with each of the two housing elements 210 and the pipe joint is completed and will not come apart under normal operating conditions.

In fact, once the pipeline is active and fluid is flowing through the coupled pipes, the increase in pressure actually helps to maintain the integrity of the coupling. As the fluid flows, the gasket 151 inflates and exerts pressure on the interior of the casing elements. This pressure acts to ensure a rigid joint and means that the housing elements 210 cannot be twisted and separated in this pressurised mode. The coupling can only be unlocked if pressure is removed. With prior art Victaulic systems, if an attempt is made to remove the bolts of a pressurised coupling, the results could cause serious injury as the coupling could be forcibly ejected from the pipe.

Furthermore, unlike prior art Victaulic joints, as shown in Figure 1, which tend to fail under pressure by the casing fracturing at the point were the flange 120 joins the ring 110, there is no single point in embodiments of the present invention where pressure is concentrated. There is therefore no single point of failure. Instead, the pressure inside the coupling acts in a substantially equal manner around the circumference of the coupling and actually helps to hold the coupling firmly in place.

In an alternative embodiment, the housing element 210 may remain stationary relative to the pipe 140, and the pipe-engaging elements 220 may rotate relative to the pipe and the housing element to achieve the required interlocking engagement. As such, the term pipe engaging element should not be interpreted to mean any positive physical interaction with the pipe (although that may be desirable in some instances). Rather, it should be interpreted to mean that it is the part in direct physical contact with the surface of the pipe.

In the embodiment where the pipe engaging element is caused to rotate relative to the pipe, this can be facilitated by the provision of a tab which protrudes from the pipe engaging element and lies on the surface of the pipe. Once the two casing elements are positioned, as described previously, rather then rotating the housing elements with respect to the pipe surface as previously described, the housing elements are held stationary with respect to the pipe surfaces and the tabs can be rotated about the surface of the pipe, which has the desired effect of interlocking the two casing elements to achieve exactly the same effect as set out before. The important point is that there is relative rotational movement between the pipe engaging elements and the housing elements.

Embodiments of the present invention have the advantage that it is not possible to only partially assemble a pipe coupling, as it is with some prior art techniques. Once the two casing elements are properly locked together, they form a safe and solid joint around the ends of the pipes coupled. This allows easy visual inspection of the completed joint and avoid problems associated with e.g. partially tightened bolts in prior art couplings.

Once secured in this position, the parts of the pipe coupling will not generally disengage, unless the housing elements 210 are rotated by 90° in the reverse direction. However, in certain situations, vibration of the pipes may cause gradual rotation over time, which may result in a failure of the coupling. In particular, impulse forces which occur when a pump, for pumping fluid through the pipes, is started or stopped, can cause problems.

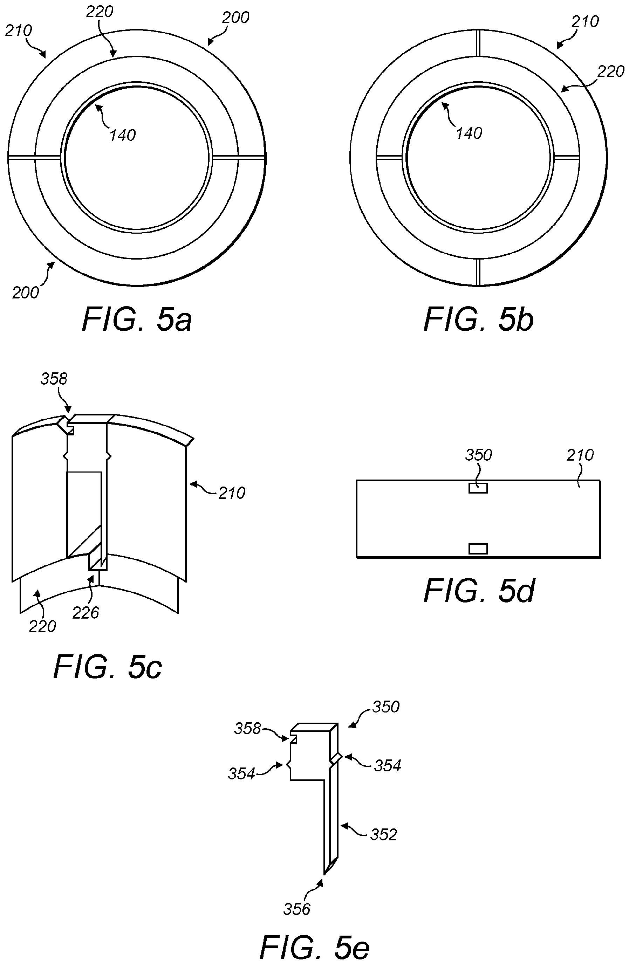

In order to prevent against this, a locking mechanism can be provided, which securely fixes the housing element 210 in a locked position, and prevents it from rotating once locked, unless it is deliberately unlocked. A locking mechanism according to an embodiment of the invention is shown and explained in Figures 5a-e.

Figure 5a shows the configuration of casing elements 200 before they are locked in position. In this configuration, if the two casing elements were not held together, they would simply separate and fall away.

Figure 5b shows the configuration after the housing elements 210 have been rotated 90° relative to the pipe engaging elements 220 (and the surface of the pipe 140).

The locking member 350, shown in Figure 5e, comprises an elongate portion 352, which is provided in a corresponding aperture in the housing element 210. The aperture is open at an outer and an inner surface of the housing element 210. The member 350 is provided with one or more projections 354 along its length to provide a frictional or interference fit in the aperture.

The elongate portion 352 is provided with a relatively resilient chamfered lower portion 356 which is provided to contact the external surface of the pipe engaging element 220, when the housing element 210 is rotated into a secured position. Once the housing element has been rotated 90°, the end 356 of the insert 352 engages with a complementary ridge 226 in the surface of the pipe engaging element 220 in a manner which indicates to the user that the lock is engaged. There may be an audible click, but there will certainly be tactile feedback, since it will not be possible to rotate the housing element substantially in either direction once the locking mechanism is engaged.

Figure 5d shows a view of the locking member 350 when viewed from above the coupling arrangement. In this embodiment, two locking members 350 are shown, but there can be any number depending on various design constraints and considerations.

If, for any reason, it is necessary to uncouple the pipes, the locking mechanism may be disabled. This is achieved by provision of a small slot 358 towards an upper end of the locking member 350, so that a screwdriver or similar tool may be inserted into the slot 358 and the locking member 350 may be levered out. The housing elements 210 may then be rotated by 90°, which causes the two casing elements 200 to separate, allowing the two pipe ends to be accessible.

Embodiments of the invention can also be used to couple plain-ended pipes i.e. those of the sort not provided with grooved ends. Such pipes are more commonly used in domestic situation, and the pipes can be formed from copper or plastics materials, for instance.

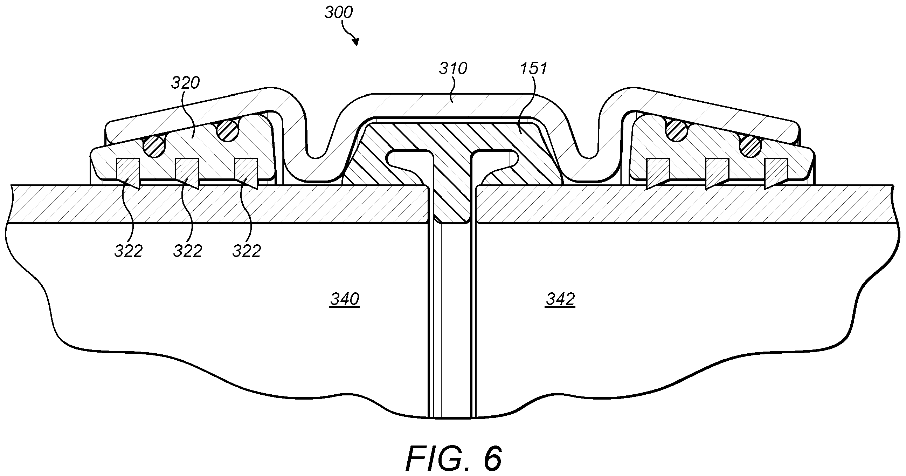

Figure 6 shows a partial cross-sectional view of a pipe coupling according to another embodiment of the invention. In particular, it shows a detailed view of a casing element 300 comprising a housing element 310 and a pair of pipe engaging elements 320. The basic construction of this embodiment is the same as the embodiment shown in Figures 3 and 4, which is intended for use with grooved pipes. The housing element 310 has a different profile to that of housing 210 in Figure 4, but this is not significant and could be identical to the previously described embodiment.

The principal difference is in the nature of the pipe engagement by the pipe engaging elements 320. In this embodiment, rather than having a radially inwardly extending projection, which is provided in the previous embodiment for engaging the grooves, the present embodiment comprises a plurality of teeth 322 for partially penetrating the surface of the pipes 340, 342 to be joined. In a preferred embodiment, the teeth are formed from a relatively hard material (compared to the material from which the pipes are formed), which are inset into the inward-facing surface of the pipe engaging elements 320. The teeth may be formed from a metal, such as steel (particularly stainless steel) or a ceramic material. Ceramic teeth 322 can penetrate the outer surface of both metal pipes and those formed from plastics materials. It is not necessary to penetrate the pipes 340, 342 to a great depth and it is certainly not desirable to completely penetrate the pipe. All that is required is that the pipe is securely retained in position. To that end, teeth 322 may be disposed around the entire inner surface of the pipe engaging element 320. More than one ring of teeth may also be provided. Figure 6 shows that three rings of teeth are provided.

As an alternative to forming the teeth in the exposed surface of the pipe engaging element, a gripping material can be interposed between the exposed surface of the pipe engaging element and the surface of the pie. A suitable material is a gripper ring, known for use in push fit pipe coupling arrangements. The gripper ring can be cut in half to give two semi-circular components.

The teeth are preferably angled to restrict movement of the pipe in a direction away from the coupling. As can be seen in Figure 6, the angled surface of the teeth 322 prevents the two pipes 340, 342 moving apart.

The method employed to couple the pipes 340, 342 is otherwise identical with that previously disclosed and is not set out here again. Similarly, the use of a locking mechanism, as shown in Figure 5, can be used with this embodiment.

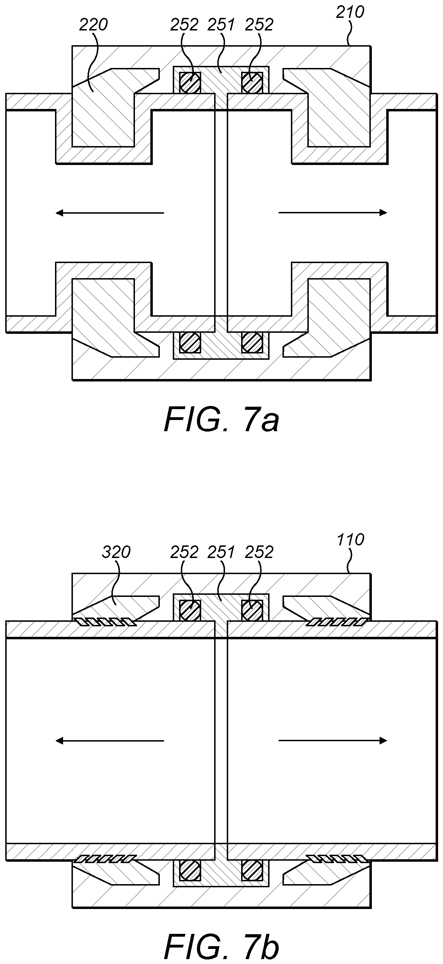

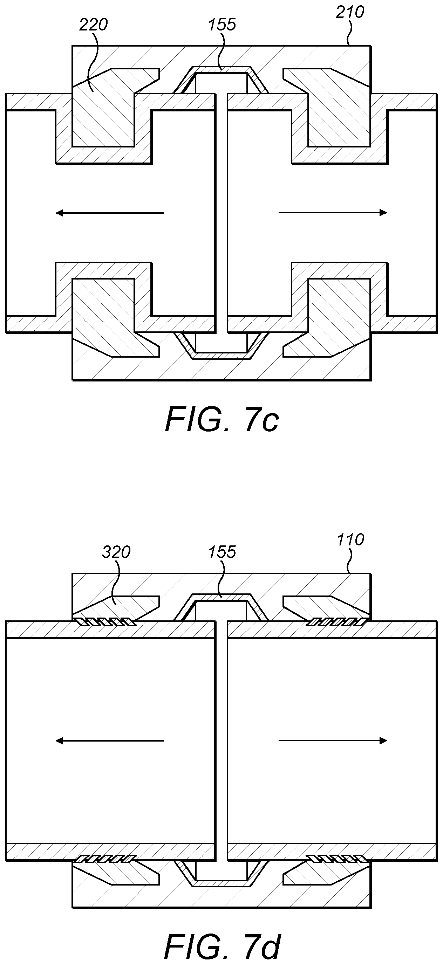

The embodiments shown so far make use of an annular gasket 151, as previously described. However, it is known in the art to use different forms of gasket and Figures 7a, 7b, 7c and 7d show representations of alternative embodiments of the present invention, which differ from those shown so far only in the nature of the gasket arrangement.

The embodiment of Figure 7a corresponds essentially with the embodiment of Figures 3 and 4, and the embodiment of Figure 7b corresponds essentially with the embodiment of Figure 6. The difference in each case is that the gasket arrangement has a different form, and may comprise a rigid annular holding ring and a pair of O-rings. Figures 7c and 7d, meanwhile, essentially correspond to the embodiments shown in Figures 7a and 7d but make use of a simple C-profile annular gasket. There is essentially no restriction on the type of gasket which may be used with embodiments of the invention. The interior channel of the housing element 210 can be shaped to conform to the gasket profile.

The rigid annular holding ring may be, at least partially slideably locatable over the conduit ends in order to straddle them. In particular, the holding ring may have a central portion which straddles the conduit ends and may have a sealing element or O-ring to either side of the central portion. In this case, at least the outer parts of the central portion may be slideably locatable over the conduit ends.

Other forms of gasket may be used and the examples illustrated and described here are not to be considered as limiting.

As can be seen by comparing the two embodiments of Figures 7a and 7b, it can be seen that the only substantive difference between them is the nature of the pipe engaging elements, with one embodiment being used for grooved pipes and the other being used for plain ended pipes. In prior art systems, it has proved difficult to successfully couple grooved to plain ended pipes, since custom fittings are usually provided for each type of pipe.

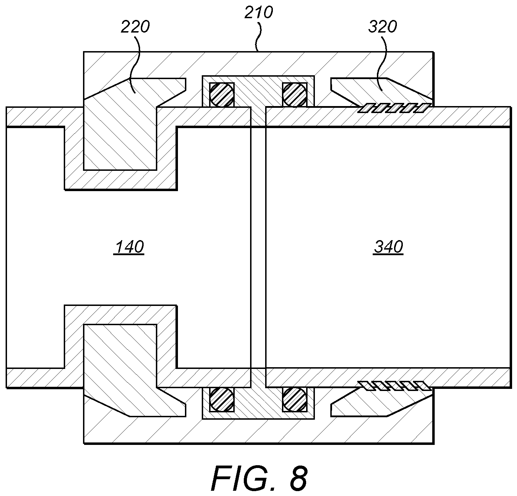

However, in an embodiment of the present invention, it is possible to assemble a casing element having a housing element 210 with two different types of pipe engaging elements. For example a first pipe engaging element 220 could be of the type for engaging a groove 146 in a grooved pipe 140, and a second pipe engaging element 320 could be of the type having teeth 322 for engaging with a plain ended pipe 340. By use of two such casing elements, it is possible to join a plain ended pipe with a grooved pipe, as shown in Fig 8. This is useful since there is a great supply of grooved fittings and attachments, such as T-pieces, elbows and valves, which are not ordinarily interoperable with plain ended pipes. By use of a mixed arrangement as shown in Figure 8, then maximum flexibility can be achieved in terms of making use of existing stock.

However, the removal of the need to groove the ends of pipes is a potentially large saving, in terms of time to perform the operation and the removal of the need to provide machinery to perform this task on-site. Depending on the pipe size, it can take between 10 and 30 minutes to properly groove each end of a pipe. This task is not required with embodiments of the present invention and represent a substantial time saving.

Similarly, embodiments of the present invention allow two pipes of slightly different sizes to be coupled, by use of appropriately sized pipe engaging elements 220. This could most often be useful is coupling a metric pipe to an Imperial/English pipe. For instance, a housing element can be specified for a small range of different pipes, which can include both metric and imperial near-equivalents. In this way, small differences in external pipe diameters can be accounted for by use of a coupling arrangement according to an embodiment of the invention.

The different pipe sizes can also have different end styles, to further enhance the utility of the system. That is, it is possible to couple a groove-ended imperial pipe to a plain ended metric pipe, or any other combination of such variables which are possible.

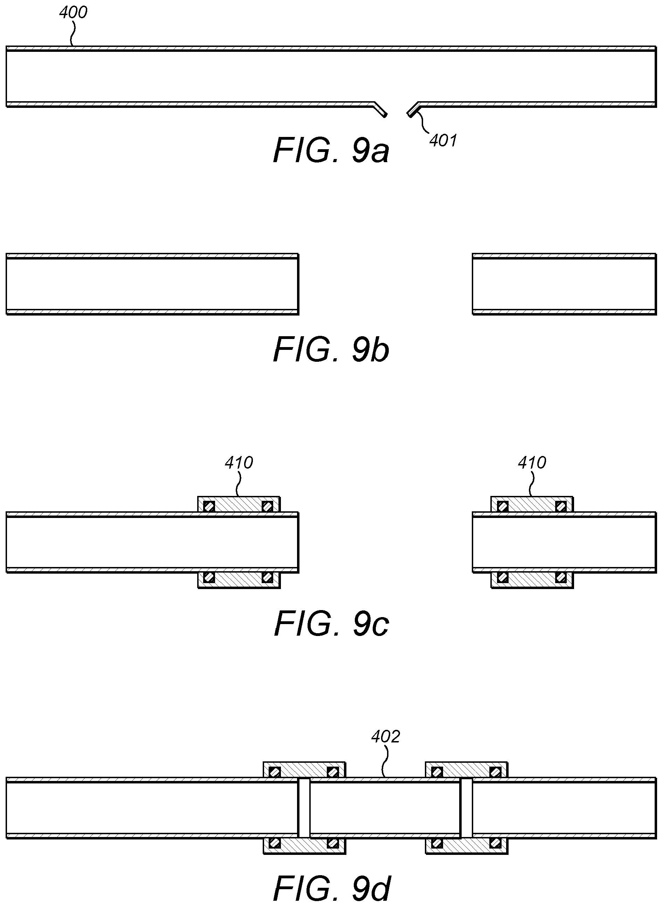

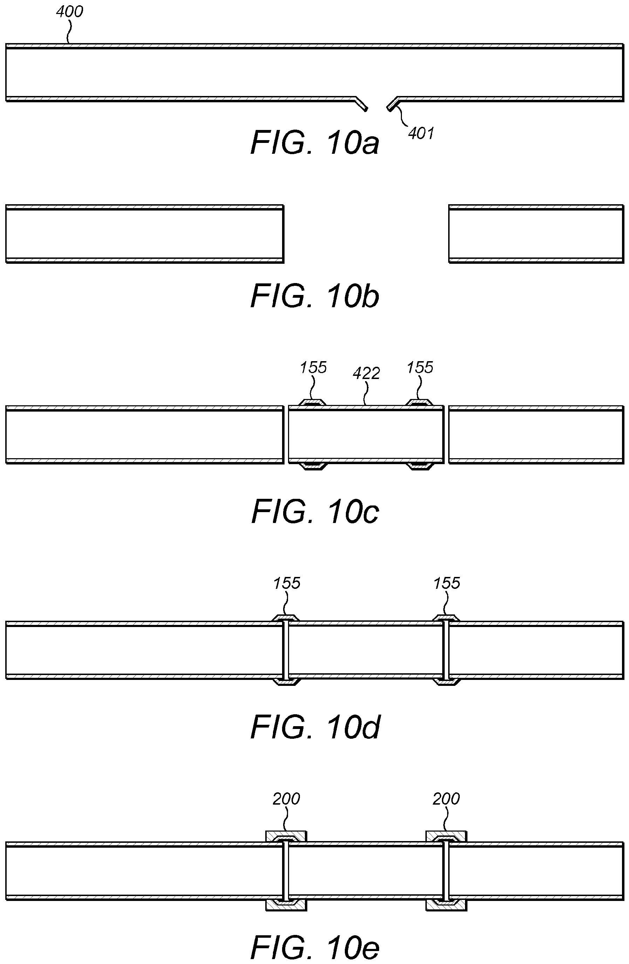

Figures 9a-d and 10a-e demonstrate the use of prior art systems and embodiments of the invention, respectively, to repair a fractured pipe.

Figure 9a shows a pipe 400 with a fracture 401, from which fluid is leaking.

Figure 9b shows a section of pipe, including the fractured portion, is removed.

Figure 9c shows that so-called slip couplings 410 are fitted to the now exposed pipe ends. Slip couplings 410 comprises a rigid annulus which has a pair of annular recesses therein. Each of the annular recesses is provided with an O-ring sealing gasket.

Figure 9d shows a new section of pipe 402, which is cut to just fit the gap between the two exposed pipe ends. The new section of pipe 402 is introduced into the gap left by the section which has been removed, and the slip couplings 410 are moved into location as shown, so that each O-ring is adjacent to each pipe end.

The prior art system shown in Figures 9a-d is temporary only and cannot form a permanent solution. It can only be used until the fluid supply can be properly stopped and a more permanent solution, such as welding, can be used. Slip couplings of the type shown may not be buried underground.

Figures 10a-e show how a fractured pipe can be permanently repaired using an embodiment of the present invention.

Figure 10a shows a pipe 400 with a fracture 401 from which fluid is leaking.

Figure 10b shows a section of pipe, including the fractured portion, is removed.

Figure 10c shows how a new section of pipe 422, sized to just fit the gap left by the removed section, is introduced. The new section 422 may be groove or plain ended, as required. The following steps will be identical in either case.

The new section 422, before it is positioned between the now exposed pipe ends, has a gasket 152 positioned adjacent each of its ends. The gasket 152 is as shown in Figures 7c and 7d and can be slipped easily onto the end of the pipe section.

Figure 10d shows how once the new section 422 is in position, the gaskets 151 are relocated such that they straddle the small gap between the various ends of the pipes.

Figure 10e shows how the coupling arrangement 200, such as that shown in Figure 3 is positioned, as has been described, around the gasket, and the outer housing elements rotated simultaneously to lock the coupling firmly in place.

Once both couplings have been locked into place, the repair is complete and can be left with no further attention or rework being required. The repaired pipe can be re-buried quite safely.

Embodiments of the present invention provide a greatly improved device and method for coupling pipes of various sizes and also of various constructions. They allow many of the problems associated with prior art pipe couplings to be minimised or avoided altogether. In particular, the need to weld pipes can be avoided. Also, to create the coupling, access is not required to any part of the pipe except for the area immediately adjacent the ends of the pipe.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A pipe coupling for connecting the ends of two tubular conduits (140,142), **characterised by** comprising:
a pair of casing elements (200), each comprising an outer part (210) and a pair of inner parts (220), the inner and outer parts being rotatable relative to each other, wherein
in a first configuration, the pair of casing elements are separate and positionable to surround the ends of the tubular conduits (140,142) and, in a second configuration, they are locked together, wherein the locking together is achieved by relative rotation of the respective inner (220) and outer (210) parts such that the inner parts of one casing element at least partially engage with the outer part of the other casing element.

2. The pipe coupling of claim 1, wherein the outer parts (210) are housing elements and the inner parts (220) are pipe engaging elements, and the coupling further comprises an annular gasket arrangement (151).

3. The pipe coupling of claim 2 wherein at least one of the pipe engaging elements has a radially inwardly facing projection (223) arranged to engage a groove (146) in a pipe.

4. The pipe coupling of claim 3 wherein the radially inwardly facing projection has pips (224) provided on a surface to, in use, contact a base of the groove (146).

5. The pipe coupling of claim 2 wherein at least one of the pipe engaging elements has radially inwardly facing teeth (322) to partially penetrate a surface of a pipe.

6. The pipe coupling according to any of claims 2 to 5 wherein end faces of the housing elements and/or the pipe engaging elements are provided with alignment features (213,214).

7. The pipe coupling as claimed in any preceding claim further comprising a locking mechanism (350) which, when engaged, prevents relative rotation of the inner and outer parts.

8. The pipe coupling of claim 7, wherein the locking mechanism (350) comprises a relatively elongate insert (352) arranged to be accommodated in a complementary aperture in the outer part and to engage with a complementary ridge (226) in the inner part.

9. The pipe coupling of claim 7 or 8, further comprising a release mechanism for disengaging the lock mechanism.

10. The pipe coupling of claim 9 wherein the release mechanism is a slot (358) arranged to allow the locking mechanism to be levered out of the locked position.

## Patentansprüche

1. Rohrverbindung zum Verbinden der Enden von zwei Rohrleitungen (140, 142), **dadurch gekennzeichnet, dass** sie Folgendes umfasst:
ein Paar Mantelelemente (200), die jeweils einen äußeren Teil (210) und ein Paar innere Teile (220) umfassen, wobei die inneren Teile und die äußeren Teile relativ zueinander drehbar sind, wobei
in einer ersten Konfiguration das Paar Mantelelemente getrennt und positionierbar ist, um die Enden der Rohrleitungen (140, 142) zu umgeben, und sie in einer zweiten Konfiguration miteinander verriegelt sind, wobei die Verriegelung durch relative Drehung der entsprechenden inneren (220) und äußeren (210) Teile derart erreicht wird, dass die inneren Teile des einen Mantelelements zumindest teilweise mit dem äußeren Teil des anderen Mantelelements in Eingriff stehen.

2. Rohrverbindung nach Anspruch 1, wobei die äußeren Teile (210) Gehäuseelemente und die inneren Teile (220) Rohreingriffselemente sind und die Verbindung ferner eine ringförmige Dichtungsanordnung (151) umfasst.

3. Rohrverbindung nach Anspruch 2, wobei mindestens eines der Rohreingriffselemente einen radial nach innen gerichteten Vorsprung (223) aufweist, der so angeordnet ist, dass er in eine Nut (146) in einem Rohr eingreift.

4. Rohrverbindung nach Anspruch 3, wobei der radial nach innen gerichtete Vorsprung auf einer Oberfläche vorgesehene Zacken (224) aufweist, um im Gebrauch einen Boden der Nut (146) zu berühren.

5. Rohrverbindung nach Anspruch 2, wobei mindestens eines der Rohreingriffselemente radial nach innen gerichtete Zähne (322) aufweist, um eine Oberfläche eines Rohres teilweise zu durchdringen.

6. Rohrverbindung nach einem der Ansprüche 2 bis 5, wobei Stirnseiten der Gehäuseelemente und/oder der Rohreingriffselemente mit Ausrichtmerkmalen (213, 214) versehen sind.

7. Rohrverbindung nach einem der vorhergehenden Ansprüche, ferner umfassend einen Verriegelungsmechanismus (350), der im eingekuppelten Zustand eine relative Drehung der inneren und äußeren Teile verhindert.

8. Rohrverbindung nach Anspruch 7, wobei der Verriegelungsmechanismus (350) einen relativ länglichen Einsatz (352) umfasst, der so angeordnet ist, dass er in einer komplementären Öffnung im äußeren Teil aufgenommen wird und mit einem komplementären Steg (226) im inneren Teil in Eingriff steht.

9. Rohrverbindung nach Anspruch 7 oder 8, ferner umfassend einen Entriegelungsmechanismus zum Lösen des Verriegelungsmechanismus.

10. Rohrverbindung nach Anspruch 9, wobei der Entriegelungsmechanismus ein Schlitz (358) ist, der so angeordnet ist, dass der Verriegelungsmechanismus aus der Verriegelungsstellung herausgehebelt werden kann.

## Revendications

1. Raccord de tuyaux servant à raccorder les extrémités de deux conduits tubulaires (140, 142), **caractérisé en ce qu'**il comprend :
une paire d'éléments d'enveloppe (200), comprenant chacun une partie extérieure (210) et une paire de parties intérieures (220), les parties extérieures et intérieures étant aptes à tourner les unes par rapport aux autres, où
dans une première configuration, la paire d'éléments d'enveloppe sont séparés et peuvent être positionnés de façon à entourer les extrémités des conduits tubulaires (140, 142) et, dans une seconde configuration, ils sont assujettis l'un à l'autre, l'assujettissement étant obtenu par rotation relative des parties intérieures (220) et extérieures (210) respectives de telle sorte que les parties intérieures d'un élément d'enveloppe viennent au moins partiellement en prise avec la partie extérieure de l'autre élément d'enveloppe.

2. Raccord de tuyaux selon la revendication 1, dans lequel les parties extérieures (210) sont des éléments de réception et les parties intérieures (220) sont des éléments de mise en prise de tuyau, et le raccord comprenant en outre un système de joint d'étanchéité annulaire (151).

3. Raccord de tuyaux selon la revendication 2, dans lequel au moins un des éléments de mise en prise de tuyau comporte une saillie orientée radialement vers l'intérieur (223) conçue pour venir en prise avec une rainure (146) dans un tuyau.

4. Raccord de tuyaux selon la revendication 3, dans lequel la saillie orientée radialement vers l'intérieur comporte des protubérances (224) formées sur une surface destinées, lors de l'utilisation, à venir en contact avec une base de la rainure (146).

5. Raccord de tuyaux selon la revendication 2, dans lequel au moins un des éléments de mise en prise de tuyau comporte des dents orientées radialement vers l'intérieur (322) destinées à pénétrer partiellement dans une surface d'un tuyau.

6. Raccord de tuyaux selon l'une quelconque des revendications 2 à 5, dans lequel les faces d'extrémité des éléments de réception et/ou des éléments de mise en prise de tuyau sont pourvues de composants d'alignement (213, 214).

7. Raccord de tuyaux selon l'une quelconque des revendications précédentes, comprenant en outre un mécanisme de blocage (350) qui, lorsqu'il est enclenché, empêche une rotation relative des parties intérieures et extérieures.

8. Raccord de tuyaux selon la revendication 7, dans lequel le mécanisme de blocage (350) comprend une partie pénétrante (352) relativement allongée, conçue pour être logée dans un orifice complémentaire dans la partie extérieure et pour venir en prise avec une proéminence complémentaire (226) dans la partie intérieure.

9. Raccord de tuyaux selon la revendication 7 ou 8, comprenant en outre un mécanisme de libération servant à désenclencher le mécanisme de blocage.

10. Raccord de tuyaux selon la revendication 9, dans lequel le mécanisme de libération est une fente (358) conçue pour permettre le soulèvement du mécanisme de blocage de façon à le faire sortir de la position bloquée.
